# EUROPEAN PATENT SPECIFICATION

(11) **EP 2 159 981 B1**
(45) Date of publication and mention of the grant of the patent: **13.03.2013**
(21) Application number: 09011174.1
(22) Date of filing: 31.08.2009
(51) Int. Cl.: H04L 27/26

(54) **OFDM signal receiving apparatus and receiving method**
Empfangsvorrichtung und -verfahren zum Empfang von OFDM-Signalen
Appareil de réception de signal OFDM et procédé de réception

(30) Priority: 01.09.2008 JP 2008223225; 10.08.2009 JP 2009185443
(43) Date of publication of application: 03.03.2010
(73) Proprietor: Mitsubishi Electric Corporation, Tokyo 100-8310 (JP)
(72) Inventor: Asahina, Tsutomu, Tokyo 100-8310 (JP); Ido, Jun, Tokyo 100-8310 (JP); Umeno, Ryosuke, Tokyo 100-8310 (JP)
(74) Representative: HOFFMANN EITLE

(56) References cited:
- EP-A1- 1 267 535
- EP-A1- 1 583 268
- EP-A2- 1 503 557
- WO-A1-2005/034460

## Description

### BACKGROUND OF THE INVENTION

### Field of the Invention

The present invention relates to an OFDM signal receiving apparatus and receiving method for receiving an OFDM (Orthogonal Frequency Division Multiplexing) signal.

### Description of the Background Art

An OFDM scheme is one of digital transmission technologies, and a transmission scheme for transmitting and receiving information demodulated and multiplexed by a plurality of sub-carriers, frequencies of which are orthogonal to each other. The OFDM scheme is being put into practical use especially in the fields of broadcasting and communications.

In the transmission with the OFDM scheme, information to be transmitted (hereinafter, referred to as transmitted data) is distributed to a plurality of sub-carriers (carrier waves), and is subjected to a digital demodulation for each sub-carrier with QPSK (Quadrature Phase Shift Keying), QAM (Quadrature Amplitude Modulation), multi-valued PSK (Phase Shift Keying), or any other similar schemes. As a signal used for demodulating a sub-carrier at a receiver, a known signal (pilot signal) is multiplexed as a specific sub-carrier (pilot carrier).

The sub-carrier multiplexed as the above is orthogonally transformed by an inverse discrete Fourier transform process, and then transmitted after frequency modulated to a desired transmitted frequency. Specifically, transmitted data is mapped in accordance with a demodulation scheme of each sub-carrier, and the inverse discrete Fourier transform is performed on the mapped transmitted data. Next, the last part of the inverse-discrete-Fourier transformed signal is copied to add to the head of the signal as a guard interval. The received signal can be regenerated by adding the guard interval to the head of the signal without inter-symbol interference at the receiver, even with a delay waveform having a delay time which is a length of the guard interval or less. The symbol is a gathering of carrier waves being subjected to the inverse discrete Fourier transform at the same timing at a transmitter.

All the sub-carriers are orthogonal to each other in the OFDM system, so that when synchronization of sub-carrier frequencies is established between transmission and reception, transmitted data can be accurately regenerated. Accordingly, a demodulation device for receiving an OFDM signal performs demodulation by frequency modulating to a desired frequency band after orthogonally demodulating a received complex digital signal of the OFDM scheme, to establish timing synchronization between transmission and reception, and frequencies synchronization of the sub-carriers, at the same time, performing a discrete Fourier transform on the received signal which is frequency modulated to generate a received signal for each sub-carrier.

A conventional OFDM signal receiving apparatus for receiving an OFDM signal using QPSK and QAM as a demodulation scheme of a sub-carrier, for example, estimates the variation of amplitude and phase of each sub-carrier in a channel with a pilot signal which is a known signal previously inserted in a transmitted signal, and corrects (equalizes) the amplitude and phase of each sub-carrier on the basis of the estimated result, in order to demodulate each sub-carrier (see Japanese Patent Application Laid-Open No. 2000-236313, FIG. 9, for example).

The OFDM signal receiving apparatus described in Japanese Patent Application Laid-Open No. 2000-236313 is not capable of specifying a position of a pilot signal unless establishing frame synchronization of a received signal, and a certain amount of time must be passed since establishment of the frame synchronization to obtain a channel characteristic, if the pilot signal is used for complementing the channel estimation. Therefore, the problem arises that the equalization process needs some time and it takes time to reproduce stable video and audio.

The above problem arises not only in a ground digital broadcasting in Japan, but also in the case of performing the channel estimation and equalization process by specifying a position of a pilot signal after establishment of frame synchronization in an OFDM signal receiving apparatus, for example, such as a ground digital broadcasting receiving apparatus having the same configuration in Europe.

WO 2005/034460 A1 relates to a receiver for receiving a multi-carrier transmission. With reference to figure 8 and 9, a decision block is described that is adapted to test the power sum result from the accumulators of the device. In figure 9, the receiver comprises two branches, one for symbol S(n) 902 and the other for the symbol S(n-1) 903. In the branch 903, the FFT block is coupled with a delay block 901. The decision block 808' can calculate the cumulated power sum based on the branch 902 and the branch 903.

### SUMMARY OF THE INVENTION

It is an object of the present invention to provide an OFDM receiving apparatus and a receiving method capable of reproducing stable video and audio in a short time by detecting a position of a pilot signal before establishing frame synchronization.

The present invention is intended for an OFDM signal receiving apparatus for receiving an OFDM signal in which a plurality of known pilot signals are periodically inserted in carrier waves in a frequency direction and a time direction.

According to the present invention, the OFDM signal receiving apparatus includes: a Fourier transform unit for performing a Fourier transform on the received OFDM signal in a symbol unit; a pilot position detecting unit for detecting positions of the pilot signals from output of the Fourier transform unit; a channel estimating unit for estimating channel characteristics of all of the carrier waves in each of the symbol using output of the pilot position detecting unit and values of the known pilot signals; a delay adjusting unit for delaying the output of the Fourier transform unit so as to synchronize output of the channel estimating unit with the output of the Fourier transform unit; and an equalization unit for correcting output of the delay adjusting unit on the basis of the output of the channel estimating unit with the output of the Fourier transform unit; and an equalization unit for correcting output of the delay adjusting unit on the basis of the output of the channel estimating unit to perform demodulation of the carrier waves; wherein the pilot position detecting unit includes; a power calculating unit for calculating the output power of the Fourier transform unit, a plurality of addition units for dividing output of the power calculating unit to the number in accordance with an insertion period of the plurality of known pilot signals in a frequency direction, and adding for a predetermined number of symbols, a position calculating unit for calculating a position of each of the pilot signals on the basis of each output of the plurality of addition units, and a sequentiality determining unit for determining sequentiality of positions of the pilot signals calculated in the position calculating unit.

The pilot position detecting unit includes; a power calculating unit for calculating the output power of the Fourier transform unit, a plurality of addition units for dividing output of the power calculating unit to the number in accordance with an insertion period of the plurality of known pilot signals in a frequency direction, and adding for a predetermined number of symbols, a position calculating unit for calculating a position of each of the plurality of known pilot signals on the basis of each output of the plurality of addition units, and a sequentiality determining unit for determining sequentiality of positions of the pilot signals calculated in the position calculating unit, allowing stable video and audio being reproduced in a short time by detecting a position of a pilot signal before establishing frame synchronization.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram of an OFDM signal receiving apparatus according to a first preferred embodiment.
FIG. 2 is a view for showing one example of a multiplexed method of scattered pilots to carrier waves according to the first preferred embodiment.
FIG. 3 is a block diagram of a pilot position detecting unit according to the first preferred embodiment.
FIG. 4 is a block diagram of the pilot position detecting unit according to a first preferred embodiment.
FIG. 5 is a block diagram of the OFDM signal receiving apparatus according to a second preferred embodiment.

### DESCRIPTION OF THE PREFERRED EMBODIMENTS

### <First Preferred Embodiment>

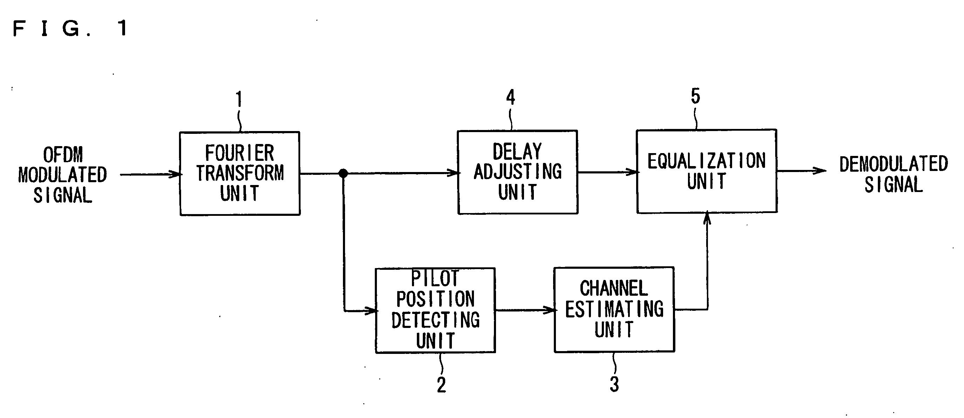

FIG. 1 is a block diagram of an OFDM signal receiving apparatus according to the first preferred embodiment. As shown in FIG. 1, the OFDM signal receiving apparatus according to the first preferred embodiment receives an OFDM signal in which pilot signals with known values (amplitude and phase) are periodically inserted in carrier waves (sub-carriers, hereinafter, simply referred to as carriers) in a frequency direction and a time direction. The OFDM signal receiving apparatus includes a Fourier transform unit 1 for performing a Fourier transform on the received OFDM signal in a symbol unit, a pilot position detecting unit 2 for detecting positions of the pilot signals from output of the Fourier transform unit 1, a channel estimating unit 3 for estimating channel characteristics of all of the carrier waves in each of the symbol with output of the pilot position detecting unit 2 and values of the known pilot signals, a delay adjusting unit 4 for delaying the output of the Fourier transform unit 1 so as to synchronize output of the channel estimating unit 3 with the output of the Fourier transform unit 1, and an equalization unit 5 for correcting output of the delay adjusting unit 4 on the basis of the output of the channel estimating unit 3 to perform demodulation of the carrier waves.

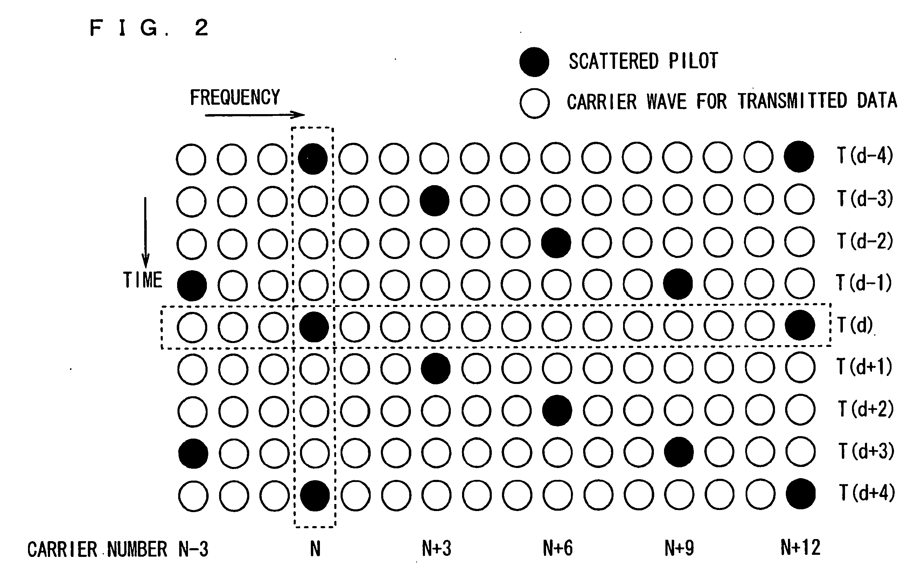

FIG. 2 is a view for showing one example of a multiplexed method (rule) of scattered pilots to carrier waves according to the first preferred embodiment. As shown in FIG. 2, letting the axis of abscissas be a frequency direction and the axis of ordinate be a time direction, N indicates a carrier number, and T (d) indicates a symbol number. In the case where each of the carrier waves of the OFDM signal transmits transmitted data with a demodulation scheme such as multi-valued PSK, or multi-valued QAM, pilot signals are periodically inserted in a frequency direction and a time direction in order to demodulate carrier waves received in the OFDM signal receiving apparatus. Specifically, scattered pilot (SP) is periodically inserted in a ground digital broadcasting in Japan. That is, as shown in FIG. 2, scattered pilots are arranged in the frequency direction with a period of every twelve carriers in one symbol, and arranged in the time direction with a period of every four symbols, shifting three carriers for each symbol.

As shown in FIG. 1, the OFDM signal is received from outside to be inputted to the Fourier transform unit 1, with a carrier and clock being regenerated. In the Fourier transform unit 1, a signal on the time axis is converted to a signal on the frequency axis by performing a Fourier transform on the inputted OFDM signal for each symbol at a predetermined timing.

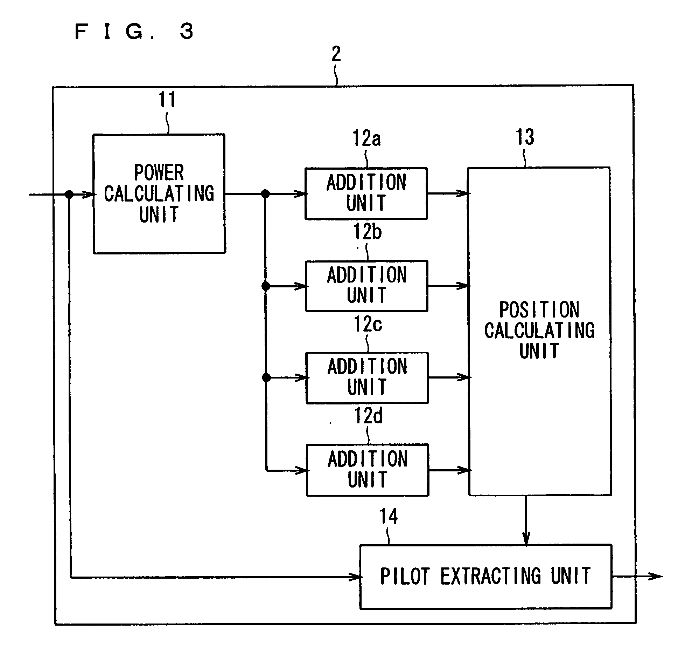

The pilot position detecting unit 2 has a configuration as shown in FIG. 3 so as to specify pilot signals for the carriers which are subjected to the Fourier transform to the frequency axis. FIG. 3 is a block diagram of the pilot position detecting unit 2 according to the first preferred embodiment. As shown in FIG. 3, the pilot position detecting unit 2 includes a power calculating unit 11 for calculating the output power of the Fourier transform unit 1, a plurality of addition units 12a to 12d for dividing output of the power calculating unit 11 to the number in accordance with an insertion period of the pilot signals in the frequency direction, and adding for a predetermined number of symbols, a position calculating unit 13 for calculating a position of each of the pilot signals on the basis of each output of the plurality of addition units 12a to 12d, and a pilot extracting unit 14 for extracting the pilot signals calculated in the position calculating unit 13.

The power calculating unit 11 calculates power for each carrier which is subjected to the Fourier transform in the Fourier transform unit 1. In calculating the power, the power of all the carriers may be calculated, or as described later, only the power of a carrier used for calculation in the addition units 12a to 12d may be calculated.

The addition unit 12a adds only the power of one carrier for a predetermined number of symbols, the carrier being one of four carriers which are predicted to be positions of scattered pilots, for example, a carrier with the carrier number: N + x; x = 0 (mod 12) shown in FIG. 2.

The addition unit 12b adds only the power of one carrier for a predetermined number of symbols, the carrier being one of four carriers which are predicted to be positions of scattered pilots other than the carrier used in the addition unit 12a, for example, a carrier with the carrier number: N + x; x = 3 (mod 12) shown in FIG. 2.

The addition unit 12c adds only the power of one carrier for a predetermined number of symbols, the carrier being one of four carriers which are predicted to be positions of scattered pilots other than the carrier used in the addition unit 12a of the addition unit 12b, for example, a carrier with the carrier number: N + x; x = 6 (mod 12) shown in FIG. 2.

The addition unit 12d adds only the power of one carrier for a predetermined number of symbols, the carrier being one of four carriers which are predicted to be positions of scattered pilots other than the carrier used in the addition units 12a to 12c, for example, a carrier with the carrier number: N + x, x = 9 (mod 12) shown in FIG. 2.

The position calculating unit 13 calculates a line including scattered pilots from output of each of the addition units 12a to 12d, and outputs as pilot position information. As one of the techniques of calculating a line including scattered pilots, there is a technique of detecting a maximum value of the power values, since a scattered pilot has generally a larger power value than other carriers so that a line including scattered pilots shows a larger value compared to the other results of the addition of the power value. For instance, in the case of receiving a symbol of a time T (d) shown in FIG. 2, the output of the addition unit 12a shows a larger value than the outputs of the other addition units 12b to 12d.

The pilot extracting unit 14 extracts a pilot signal on the basis of the result calculated by the position calculating unit 13, and outputs to the channel estimating unit 3.

The channel estimating unit 3 calculates channel characteristic values (frequency response) of all the carriers for each symbol using information of the pilot positions detected in the pilot position detecting unit 2 and values of known pilot signals, and estimates the channel characteristics of the carriers.

The delay adjusting unit 4 delays the output of the Fourier transform unit 1 in order to synchronize the output of the channel estimating unit 3 with the output of the Fourier transform unit 1. More in detail, each carrier outputted from the Fourier transform unit 1 is delayed for a predetermined of time in order to synchronize the channel characteristic of each carrier outputted from the channel estimating unit 3 with each carrier outputted from the Fourier transform unit 1.

The equalization unit 5 corrects the output of the delay adjusting unit 4 on the basis of the output of the channel estimating unit 3, to perform demodulation of a carrier. Specifically, the delayed carrier outputted from the delay adjusting unit 4 is divided by the channel characteristic estimated to correspond to each carrier and outputted from the channel estimating unit 3, to output as a demodulated signal for each carrier to subsequent circuits (not shown, but an error correction unit, a video audio reproducing unit, and a display unit).

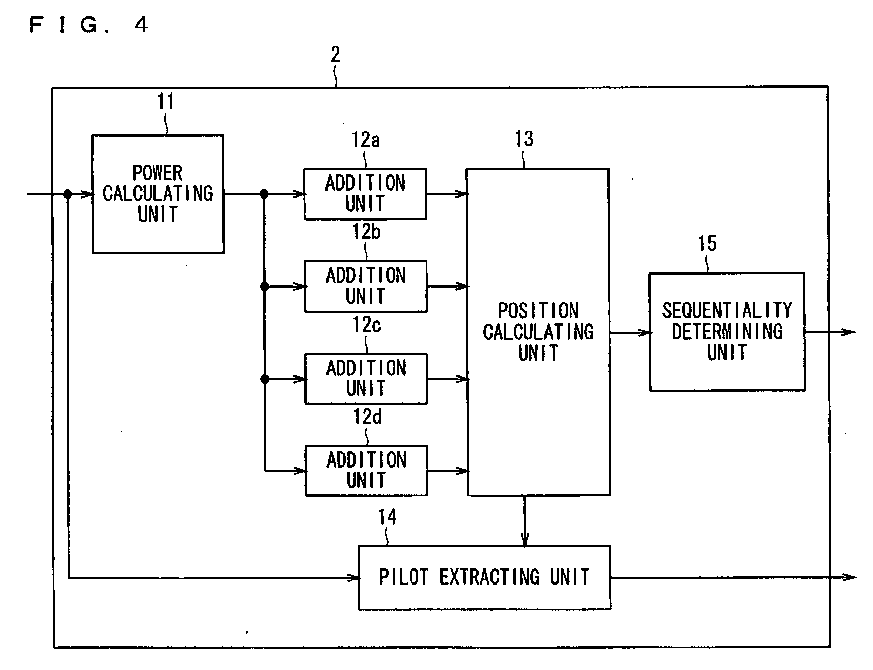

FIG. 4 is a block diagram of the pilot position detecting unit 2 according to the second preferred embodiment. The second preferred embodiment is characterized in including a sequentiality determining unit 15 shown in FIG. 4. As shown in FIG. 4, the sequentiality determining unit 15 receives position information of the pilot signals outputted from the position calculating unit 13 sequentially, and determines their sequentiality (or their reliability) (whether the position information sequentially conforms to the multiplexed rules of a pilot signal) to output a sequentiality determining signal indicating a determining result to the channel estimating unit 3 together with the position information of the pilot signals. It should be noted that the sequentiality determining unit 15 previously stores information of a period in a frequency direction and time direction as the multiplexed rules, the period with which a transmitter for transmitting an OFDM signal inserts pilot signals into the OFDM signal.

One of the examples of a sequentiality determining process performed by the sequentiality determining unit 15 will be described below.

For instance, in the case of receiving a symbol of a time T (d) shown in FIG. 2, if the output of the addition unit 12a shown in FIG. 4 (a line corresponding to the carrier number shown in FIG. 2: N + x ; x = 0 (mod 12)) shows a larger value than the outputs of the other addition units 12b to 12d, the sequentiality determining unit 15 determines the sequentiality based on whether or not the output of the addition unit 12b (a line corresponding to the carrier number shown in FIG. 2: N + x ; x = 3 (mod 12)) shows a larger value the outputs of the other addition units 12a to 12d in the next symbol. In addition, the sequentiality determining unit 15 determines the further sequentiality based on whether or not the output of the addition unit 12c (a line corresponding to the carrier number shown in FIG. 2: N + x ; x = 6 (mod 12)) shows a larger value than the outputs of the other addition units 12a to 12d in the further next symbol. The sequentiality may be determined in a given number of times, or may be continuously determined.

In addition to the process shown in FIG. 3, based on the inputted sequentiality determining signal, when there is a sequentiality, the position information of the pilot signals simultaneously inputted to the channel estimating unit 3 is used in the channel estimating unit 3, and when there is no sequentiality, the channel estimating unit 3 outputs nothing to the equalization unit 5, or the channel estimating unit 3 may be not operated.

When the sequentiality determining unit 15 determines that there is a sequentiality, only the position information of the pilot signals may be outputted, and when determines that there is no sequentiality, the position information of the pilot signals may be not outputted.

From the above, the pilot position detecting unit 2 can detect the positions of the pilot signals before establishing frame synchronization so that the equalization process using the channel characteristic obtained by the channel estimation is made possible even before frame synchronization, thereby allowing stable video and audio to be reproduced in a shorter time than before. Further, the accuracy of the position information of the pilot signals is improved by providing the sequentiality determining unit 15, allowing the reliability to be further more improved than in the first preferred embodiment.

### <Second Preferred Embodiment>

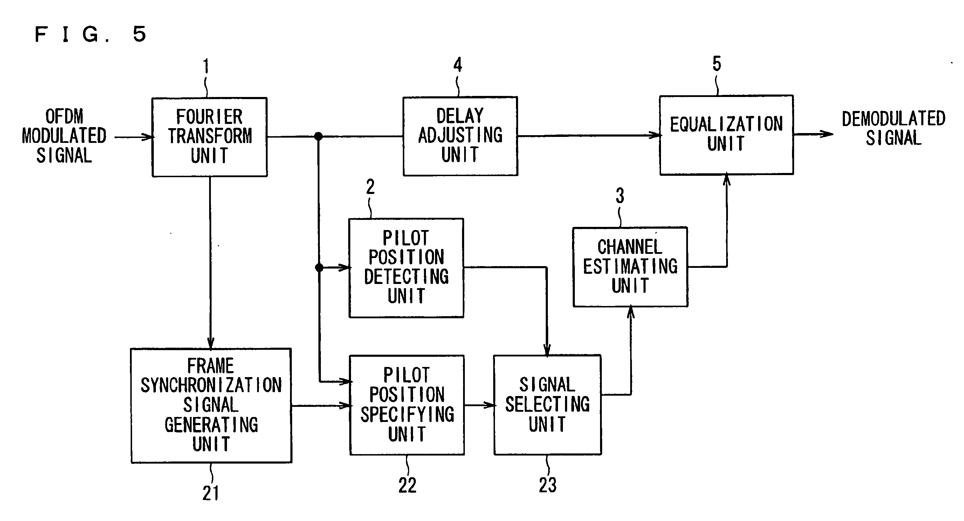

FIG. 5 is a block diagram of the OFDM signal receiving apparatus according to the second preferred embodiment. The pilot position detecting unit 2 detects the position of the pilot signals regardless of establishment of frame synchronization in the first preferred embodiment. In contrast, the second preferred embodiment is characterized in comprising a frame synchronization signal generating unit 21, a pilot position specifying unit 22, and a signal selecting unit 23, and switching to the position information that specifies the positions of the pilot signals on the basis of frame synchronization. Other configuration and operation are similar to those of the first preferred embodiment so that the description thereof is omitted here.

As shown in FIG. 5, the frame synchronization signal generating unit 21 detects a synchronization signal from a synchronization signal included in the received OFDM signal and showing a timing of frame synchronization to generate a frame synchronization signal and output it to the pilot position specifying unit 22.

The pilot position specifying unit 22 specifies the positions of the pilot signals on the basis of the frame synchronization signal outputted form the frame synchronization signal generating unit 21, and outputs them to the signal selecting unit 23.

The signal selecting unit 23 selects between the output of the pilot position detecting unit 2 and the output of the pilot position specifying unit 22, and switches therebetween, in accordance with presence or absence of the frame synchronization signal outputted from the frame synchronization signal generating unit 21. That is, when a frame synchronization signal is present, the output of the pilot position specifying unit 22 is selected, and when a frame synchronization signal is absent, the output of the pilot position detecting unit 2 is selected.

From the above, the accuracy of the position information of the pilot signals is improved by providing the frame synchronization signal generating unit 21, the pilot position specifying unit 22, and the signal selecting unit 23, allowing the reliability to be further more improved than in the first preferred embodiment.

With respect to the configuration of the OFDM signal receiving apparatus in the second preferred embodiment, the sequentiality determining unit 15 described in the first preferred embodiment may be further added. By doing so, the reliability of the position information of the pilot signals can be further more improved.

While the present invention has been described in its preferred embodiments as receiving an OFDM signal used in a ground digital broadcasting in Japan, it is distinctly understood that the present invention is not limited thereto. While the foregoing description of the preferred embodiments illustrates the applicable form of the invention, the present invention is not limited thereto, but also applied to a receiving method, for example.

## Claims

1. An OFDM signal receiving apparatus for receiving an OFDM signal in which a plurality of known pilot signals are periodically inserted in carrier waves in a frequency direction and a time direction, comprising:
a Fourier transform unit (1) configured to perform a Fourier transform on a received said OFDM signal in a symbol unit;
a pilot position detecting unit (2) configured to detect positions of said pilot signals from output of said Fourier transform unit (1);
a channel estimating unit (3) configured to estimate channel characteristics of all of said carrier waves in each of said symbol using output of said pilot position detecting unit (2) and values of said known pilot signals;
**characterized in that** the apparatus further comprises:
a delay adjusting unit (4) configured to delay the output of said Fourier transform unit (1) so as to synchronize output of said channel estimating unit (3) with the output of said Fourier transform unit (1); and
an equalization unit (5) configured to correct output of said delay adjusting unit (4) on the basis of the output of said channel estimating unit (3) to perform demodulation of said carrier waves; wherein
said pilot position detecting unit (2) includes;
a power calculating unit (11) configured to calculate the output power of said Fourier transform unit (1),
a plurality of addition units (12a to 12d) configured to divide output of said power calculating unit (11) to the number in accordance with an insertion period of said plurality of known pilot signals in a frequency direction, and adding for a predetermined number of symbols,
a position calculating unit (13) configured to calculate a position of each of said pilot signals on the basis of each output of said plurality of addition units (12a to 12d), and
a sequentiality determining unit (15) configured to determine sequentiality with respect to positions of said pilot signals calculated in said position calculating unit (13) by conforming to multiplexed rules of said pilot signal of said OFDM signal, wherein said channel estimating unit estimates said channel characteristics when there is a sequentiality determined in said sequentiality determining unit, and does not estimate said channel characteristics when there is no sequentiality in said sequentiality determining unit.

2. An OFDM signal receiving apparatus according to claim 1, wherein said sequentiality determining unit (15) previously stores periodic insertion positions in the frequency direction and time direction of said pilot signals as multiplexed rules, so as to determine the sequentiality of positions of said pilot signals based on whether the positions of said pilot signals calculated sequentially in said position calculating unit (13) conform to said multiplexed rules or not.

3. The OFDM signal receiving apparatus according to either one of claims 1 and 2 wherein
said position calculating unit (13) is configured to calculate a maximum value of the output power of said plurality of addition units (12a to 12d).

4. The OFDM signal receiving apparatus according to either one of claims 1 to 3, further comprising:
a frame synchronization signal generating unit (21) configured to detect a synchronization signal from a synchronization signal showing a timing of frame synchronization and included in a received said OFDM signal to generate a frame synchronization signal;
a pilot position specifying unit (22) configured to specify positions of said pilot signals on the basis of said frame synchronization signal outputted from said frame synchronization signal generating unit (21); and
a signal selecting unit (23) configured to select between output of said pilot position detecting unit (2) and output of said pilot position specifying unit (22), and switching therebetween, in accordance with presence or absence of said frame synchronization signal outputted from said frame synchronization signal generating unit (21).

5. An OFDM signal receiving method for receiving an OFDM signal in which a plurality of known pilot signals are periodically inserted in carrier waves in a frequency direction and a time direction, comprising the steps of:
a) performing a Fourier transform on a received said OFDM signal in a symbol unit;
b) detecting positions of said pilot signals from output of said step a) ;
c) estimating every channel characteristics of all of said carrier waves in each of said symbol using output of said step b) and values of said known pilot signals;
**characterized by**
d) delaying the output of said step a) so as to synchronize output of said step c) with the output of said step a) ; and
e) performing demodulation of said carrier waves by correcting output of said step d) on the basis of the output of said step c) ; wherein
said step b) includes the steps of;
b-1) calculating the output power of said step a),
b-2) dividing output of said step b-1) to the number in accordance with an insertion period of said plurality of known pilot signals in a frequency direction, and adding for a predetermined number of symbols, for more than once;
b-3) detecting a position of each of said pilot signals on the basis of each output of said step b-2), and
b-4) determining sequentiality with respect to positions of said pilot signals detected in said step b-3) by conforming to multiplexed rules of said pilot signal of said OFDM signal, wherein said channel estimating step estimates said channel characteristics when there is a sequentiality determined in said step of determining sequentiality, and does not estimate said channel characteristics when there is no sequentiality in said step of determining sequentiality.

6. An OFDM signal receiving method according to claim 5, wherein in said step b-4), periodic insertion positions in the frequency direction and time direction of said pilot signals are previously stored as multiple rules, and the sequentiality of positions of said pilot signals are determined based on whether the positions of said pilot signals calculated sequentially in said position calculating unit (13) conform to said multiple rules or not.

7. The method according to either one of claims 5 and 6, wherein
in said step b-3), a maximum value of the output power of said step b-2) is detected.

8. The method according to either one of claims 5 to 7, further comprising the steps of:
f) detecting a synchronization signal from a synchronization signal showing a timing of frame synchronization and included in a received said OFDM signal to gene ate a frame synchronization signal;
g) specifying positions of said pilot signals on the basis of said frame synchronization signal outputted through said step f); and
h) selecting between output of said step b) and output of said step g), and switching therebetween, in accordance with presence or absence of said frame synchronization signal outputted through said step f).

## Patentansprüche

1. OFDM-Signalempfangsvorrichtung zum Empfangen eines OFDM-Signals, in dem eine Mehrzahl bekannter Pilotsignale periodisch in Trägerwellen in einer Frequenzrichtung und einer Zeitrichtung eingefügt sind, umfassend:
eine Fourier-Transformationseinheit (1), die konfiguriert ist, eine Fourier-Transformation an einem empfangenen besagten OFDM-Signal in einer Symboleinheit durchzuführen;
eine Pilotpositionsdetektionseinheit (2), die konfiguriert ist, Positionen der Pilotsignale aus einer Ausgabe der Fourier-Transformationseinheit (1) zu detektieren;
eine Kanalschätzeinheit (3), die konfiguriert ist, Kanalcharakteristika aller besagter Trägerwellen in jedem Symbol unter Verwendung einer Ausgabe der Pilotpositionsdetektionseinheit (2) und Werten der bekannten Pilotsignale abzuschätzen;
**dadurch gekennzeichnet, dass** die Vorrichtung weiter umfasst:
eine Verzögerungsjustiereinheit (4), die konfiguriert ist, die Ausgabe der Fourier-Transformationseinheit (1) so zu verzögern, dass die Ausgabe der Kanalschätzeinheit (3) zu der Ausgabe der Fourier-Transformationseinheit (1) synchronisiert ist; und
eine Ausgleichseinheit (5), die konfiguriert ist, die Ausgabe der Verzögerungsjustiereinheit (4) auf Basis der Ausgabe der Kanalschätzeinheit (3) zu korrigieren, um eine Demodulation der Trägerwellen durchzuführen; wobei
die Pilotpositionsdetektionseinheit (2) beinhaltet:
eine Leistungsberechnungseinheit (11), die konfiguriert ist, die Ausgangsleistung der Fourier-Transformationseinheit (1) zu berechnen,
eine Mehrzahl von Additionseinheiten (12a bis 12d), die konfiguriert sind, die Ausgabe der Leistungsberechnungseinheit (11) zu der Anzahl entsprechend einem Einfügzeitraum der Mehrzahl bekannter Pilotsignale in einer Frequenzrichtung zu unterteilen, und Addieren über eine vorgegebene Anzahl von Symbolen,
eine Positionsberechnungseinheit (13), die konfiguriert ist, eine Position jedes der Pilotsignale auf Basis jeder Ausgabe der Mehrzahl von Additionseinheiten (12a bis 12d) zu berechnen, und
eine Sequentialitätsbestimmungseinheit (15), die konfiguriert ist, eine Sequentialität in Bezug auf Positionen der Pilotsignale, die in der Positionsberechnungseinheit (13) berechnet sind, durch Anpassen an Multiplexregeln des Pilotsignals des OFDM-Signals zu bestimmen, wobei die Kanalschätzeinheit die Kanalcharakteristika abschätzt, wenn es eine in der Sequentialitätsbestimmungseinheit bestimmte Sequentialität gibt, und die Kanalcharakteristika nicht abschätzt, wenn es in der Sequentialitätsbestimmungseinheit keine Sequentialität gibt.

2. OFDM-Signalempfangsvorrichtung gemäß Anspruch 1, wobei die Sequentialitätsbestimmungseinheit (15) im Vorfeld periodische Einfügepositionen in der Frequenzrichtung und der Zeitrichtung der Pilotsignale als Multiplexregeln speichert, um so die Sequentialität von Positionen der Pilotsignale basierend darauf zu bestimmen, ob die Positionen der in der Positionsberechnungseinheit (13) sequentiell berechneten Pilotsignale den Multiplexregeln genügen oder nicht.

3. OFDM-Signalempfangsvorrichtung gemäß einem der Ansprüche 1 oder 2, wobei
die Positionsberechnungseinheit (13) konfiguriert ist, einen Maximalwert der Ausgangsleistung der Mehrzahl von Additionseinheiten (12a-12d) zu berechnen.

4. OFDM-Signalempfangsvorrichtung gemäß einem der Ansprüche 1 bis 3, weiter umfassend:
eine Rahmensynchronisationssignal-Erzeugungseinheit (21), die konfiguriert ist, ein Synchronisationssignal aus einem Synchronisationssignal zu detektieren, das einen Zeitpunkt der Rahmensynchronisation zeigt und in einem empfangenen, besagten OFDM-Signal beinhaltet ist, um ein Rahmensynchronisationssignal zu erzeugen;
eine Pilotpositionsspezifikationseinheit (22), die konfiguriert ist, Positionen der Pilotsignale auf Basis des aus der Rahmensynchronisationssignal-Erzeugungseinheit (21) ausgegebenen Rahmensynchronisationssignals zu spezifizieren; und
eine Signalauswahleinheit (23), die konfiguriert ist, zwischen der Ausgabe der Pilotpositionsdetektionseinheit (2) und der Ausgabe der Pilotpositionsspezifikationseinheit (22) auszuwählen und dazwischen umzuschalten, gemäß der Anwesenheit oder Abwesenheit des aus der Rahmensynchronisationssignal-Erzeugungseinheit (21) ausgegebenen Rahmensynchronisationssignals.

5. OFDM-Signalempfangsverfahren zum Empfangen eines OFDM-Signals, in welchem eine Mehrzahl bekannter Pilotsignale periodisch in Trägerwellen in einer Frequenzrichtung und einer Zeitrichtung eingefügt sind, umfassend die Schritte:
a) Durchführen einer Fourier-Transformation an einem empfangenen besagten OFDM-Signal in einer Symboleinheit;
b) Detektieren von Positionen der Pilotsignale aus der Ausgabe des Schritts a);
c) Abschätzen jeder Kanalcharakteristika aller Trägerwellen in jedem besagten Symbol unter Verwendung der Ausgabe aus Schritt b) und von Werten der bekannten Pilotsignale;
**gekennzeichnet durch**:
d) Verzögern der Ausgabe des Schritts a), um so die Ausgabe des Schritts c) mit der Ausgabe des Schritts a) zu synchronisieren; und
e) Durchführen von Modulation der Trägerwellen **durch** Korrigieren der Ausgabe des Schritts d) auf Basis der Ausgabe des Schritts c); wobei
der Schritt b) die Schritte beinhaltet:
b-1) Berechnen der Ausgabeleistung des Schritts a),
b-2) Unterteilen der Ausgabe des Schritts b-1) zur Anzahl gemäß einem Einfügzeitraum der Mehrzahl von bekannten Pilotsignalen in einer Frequenzrichtung, und Addieren über eine vorgegebene Anzahl von Symbolen, mehr als einmal;
b-3) Detektieren einer Position jedes der Pilotsignale auf Basis jeder Ausgabe des Schritts b-2), und
Bestimmen von Sequentialität in Bezug auf Positionen der im Schritt b-3) detektierten Pilotsignale **durch** in Übereinstimmung bringen mit Multiplexregeln des Pilotsignals des OFDM-Signals, wobei der Kanalschätzschritt die Kanalcharakteristika schätzt, wenn es eine in dem Schritt des Bestimmens von Sequentialität bestimmte Sequentialität gibt, und die Kanalcharakteristika nicht schätzt, wenn es keine Sequentialität im Schritt des Bestimmens von Sequentialität gibt.

6. OFDM-Signalempfangsverfahren gemäß Anspruch 5, wobei im Schritt b-4) periodische Einfügepositionen in der Frequenzrichtung und Zeitrichtung der Pilotsignale im Vorfeld als mehrere Regeln gespeichert werden und die Sequentialität von Positionen der Pilotsignale basierend darauf bestimmt werden, ob die Positionen der sequentiell in der Positionsberechnungseinheit (13) berechneten Positionssignale den mehreren Regeln entsprechen oder nicht.

7. Verfahren gemäß einem der Ansprüche 5 oder 6, wobei
im Schritt b-3) ein Maximalwert der Ausgangsleistung des Schrittes b-2) detektiert wird.

8. Verfahren gemäß einem der Ansprüche 5 bis 7, weiter umfassend die Schritte:
f) Detektieren eines Synchronisationssignals aus einem Synchronisationssignal, das ein Timing von Rahmensynchronisation zeigt und in einem empfangenen besagten OFDM-Signal enthalten ist, um ein Rahmensynchronisationssignal zu erzeugen;
g) Spezifizieren von Positionen der Pilotsignale auf Basis des durch Schritt f) ausgegebenen Rahmensynchronisationssignals; und
h) Auswählen zwischen Ausgabe des Schritts b) und Ausgabe des Schritts g) und Umschalten dazwischen anhand der Anwesenheit oder Abwesenheit des Rahmensynchronisationssignals, das durch Schritt f) ausgegeben wurde.

## Revendications

1. Appareil de réception de signal OFDM (multiplexage par répartition orthogonale de la fréquence) pour recevoir un signal OFDM dans lequel une pluralité de signaux pilotes connus sont périodiquement insérés dans des ondes porteuses dans une direction de fréquence et une direction de temps, comprenant :
une unité de Transformée de Fourier (1) configurée pour effectuer une Transformée de Fourier sur un dit signal OFDM reçu dans une unité de symbole ;
une unité de détection de position pilote (2) configurée pour détecter des positions desdits signaux pilotes à partir de la sortie de ladite unité de Transformée de Fourier (1) ;
une unité d'évaluation de canal (3) configurée pour évaluer des caractéristiques de canal de la totalité desdites ondes porteuses dans chacun dudit symbole en utilisant la sortie de ladite unité de détection de position pilote (2) et des valeurs desdits signaux pilotes connus ;
**caractérisé en ce que** l'appareil comprend en outre :
une unité d'ajustement de retard (4) configurée pour retarder la sortie de ladite unité de Transformée de Fourier (1) de façon à synchroniser la sortie de ladite unité d'évaluation de canal (3) avec la sortie de ladite unité de Transformée de Fourier (1) ; et
une unité d'égalisation (5) configurée pour corriger la sortie de ladite unité d'ajustement de retard (4) sur la base de la sortie de ladite unité d'évaluation de canal (3) pour effectuer la démodulation desdites ondes porteuses ; dans lequel
ladite unité de détection de position pilote (2) inclut ;
une unité de calcul de puissance (11) configurée pour calculer la puissance de sortie de ladite unité de Transformée de Fourier (1),
une pluralité d'unités d'addition (12a à 12d) configurées pour diviser la sortie de ladite unité de calcul de puissance (11) en un nombre en accord avec une période d'insertion de ladite pluralité de signaux pilotes connus dans une direction de fréquence, et ajouter pour un nombre prédéterminé de symboles,
une unité de calcul de position (13) configurée pour calculer une position de chacun desdits signaux pilotes sur la base de chaque sortie de ladite pluralité d'unités d'addition (12a à 12d), et
une unité de détermination de séquentialité (15) configurée pour déterminer la séquentialité en ce qui concerne les positions desdits signaux pilotes calculées dans ladite unité de calcul de position (13) en se conformant à des règles multiplexées dudit signal pilote dudit signal OFDM, dans lequel ladite unité d'évaluation de canal évalue lesdites caractéristiques de canal quand il y a une séquentialité déterminée dans ladite unité de détermination de séquentialité, et n'évalue pas lesdites caractéristiques de canal quand il n'y a aucune séquentialité dans ladite unité de détermination de séquentialité.

2. Appareil de réception de signal OFDM selon la revendication 1, dans lequel ladite unité de détermination de séquentialité (15) stocke à l'avance des positions d'insertion périodiques dans la direction de fréquence et la direction de temps desdits signaux pilotes en tant que règles multiplexées, de façon à déterminer la séquentialité des positions desdits signaux pilotes en se basant sur le fait que les positions desdits signaux pilotes calculées de manière séquentielle dans ladite unité de calcul de position (13) se conforment ou non auxdites règles multiplexées.

3. Appareil de réception de signal OFDM selon l'une ou l'autre des revendications 1 et 2, dans lequel
ladite unité de calcul de position (13) est configurée pour calculer une valeur maximale de la puissance de sortie de ladite pluralité d'unités d'addition (12a à 12d).

4. Appareil de réception de signal OFDM selon l'une ou l'autre des revendications 1 à 3, comprenant en outre :
une unité de production de signal de synchronisation de trame (21) configurée pour détecter un signal de synchronisation à partir d'un signal de synchronisation montrant un cadencement de synchronisation de trame et inclus dans un dit signal OFDM reçu pour produire un signal de synchronisation de trame ;
une unité de spécification de position pilote (22) configurée pour spécifier des positions desdits signaux pilotes sur la base dudit signal de synchronisation de trame sorti en provenance de ladite unité de production de signal de synchronisation de trame (21) ; et
une unité de sélection de signal (23) configurée pour sélectionner entre la sortie de ladite unité de détection de position (2) et la sortie de ladite unité de spécification de position pilote (22), et faire la commutation entre ces dernières, selon la présence ou l'absence dudit signal de synchronisation de trame sorti en provenance de ladite unité de production de signal de synchronisation de trame (21).

5. Procédé de réception de signal OFDM pour recevoir un signal OFDM dans lequel une pluralité de signaux pilotes connus sont périodiquement insérés dans des ondes porteuses dans une direction de fréquence et une direction de temps, comprenant les étapes de :
a) exécution d'une Transformée de Fourier sur un dit signal OFDM reçu dans une unité de symbole ;
b) détection de positions desdits signaux pilotes à partir de la sortie de ladite étape a) ;
c) évaluation de toutes les caractéristiques de canal de la totalité desdites ondes porteuses dans chacun dudit symbole en utilisant la sortie de ladite étape b) et des valeurs desdits signaux pilotes connus ;
**caractérisé par**
d) le retard de la sortie de ladite étape a) de façon à synchroniser la sortie de ladite étape c) avec la sortie de ladite étape a) ; et
e) l'exécution d'une démodulation desdites ondes porteuses en corrigeant la sortie de ladite étape d) sur la base de la sortie de ladite étape c) ; dans lequel
ladite étape b) inclut les étapes de ;
b-1) calcul de la puissance de sortie de ladite étape a),
b-2) division de la sortie de ladite étape b-1) en un nombre en accord avec une période d'insertion de ladite pluralité de signaux pilotes connus dans une direction de fréquence, et addition pour un nombre prédéterminé de symboles, pour plus d'une fois ;
b-3) détection d'une position de chacun desdits signaux pilotes sur la base de chaque sortie de ladite étape b-2), et
b-4) détermination de la séquentialité en ce qui concerne les positions desdits signaux pilotes détectées dans ladite étape b-3) en se conformant à des règles multiplexées dudit signal pilote dudit signal OFDM, dans laquelle ladite étape d'évaluation de canal évalue lesdites caractéristiques de canal quand il y a une séquentialité déterminée dans ladite étape de détermination de séquentialité, et n'évalue pas lesdites caractéristiques de canal quand il n'y a aucune séquentialité dans ladite étape de détermination de séquentialité.

6. Procédé de réception de signal OFDM selon la revendication 5, dans lequel, dans ladite étape b-4), des positions d'insertion périodiques dans la direction de fréquence et la direction de temps desdits signaux pilotes sont stockées à l'avance en tant que règles multiples, et la séquentialité des positions desdits signaux pilotes est déterminée en se basant sur le fait que les positions desdits signaux pilotes calculées de manière séquentielle dans ladite unité de calcul de position (13) se conforment ou non auxdites règles multiples.

7. Procédé selon l'un ou l'autre des revendications 5 et 6, dans lequel
dans ladite étape b-3), une valeur maximale de la puissance de sortie de ladite étape b-2) est détectée.

8. Procédé selon l'une ou l'autre des revendications 5 à 7, comprenant en outre les étapes de :
f) détection d'un signal de synchronisation à partir d'un signal de synchronisation montrant un cadencement de synchronisation de trame et inclus dans un dit signal OFDM reçu pour produire un signal de synchronisation de trame ;
g) spécification de positions desdits signaux pilotes sur la base dudit signal de synchronisation de trame sorti par ladite étape f) ; et
h) sélection entre la sortie de ladite étape b) et la sortie de ladite étape g), et commutation entre ces dernières, selon la présence ou l'absence dudit signal de synchronisation de trame sorti par ladite étape f).
